# EUROPÄISCHE PATENTSCHRIFT

(11) **EP 2 790 896 B1**
(45) Veröffentlichungstag und Bekanntmachung des Hinweises auf die Patenterteilung: **11.03.2020**
(21) Anmeldenummer: 12809161.8
(22) Anmeldetag: 11.12.2012
(51) Int. Cl.: B29C 65/48, B29C 65/54, B29C 65/78, B29C 44/12, B29C 44/18, B29L 31/30, B29L 31/00, B29K 223/00, B29L 23/00

(54) **VERBUNDBAUTEIL UND VERFAHREN ZUM HERSTELLEN EINES VERBUNDBAUTEILS**
COMPOSITE COMPONENT AND METHOD FOR PRODUCING A COMPOSITE COMPONENT
PIÈCE COMPOSITE ET PROCÉDÉ DE FABRICATION D'UNE PIÈCE COMPOSITE

(30) Priorität: 12.12.2011 DE 102011088286
(43) Veröffentlichungstag der Anmeldung: 22.10.2014
(73) Patentinhaber: Bayerische Motoren Werke Aktiengesellschaft, 80809 München (DE)
(72) Erfinder: BRAUCH, Michael, 85598 Baldham (DE)
(86) Internationale Anmeldenummer: PCT/EP2012/075017
(87) Internationale Veröffentlichungsnummer: WO 2013/087595

(56) Entgegenhaltungen:
- FR-A- 1 114 386
- US-A1- 2010 092 733

## Beschreibung

Die vorliegende Erfindung bezieht sich auf ein Verbundbauteil und ein Verfahren zum Herstellen eines Verbundbauteils mit einem ersten Bauteilelement und einem zweiten Bauteilelement, wobei das erste Bauteilelement und das zweite Bauteilelement durch eine Klebeverbindung miteinander verbunden sind. Das Verbundbauteil kann ein tragendes Teil einer Kraftfahrzeugkarosserie sein.

Es ist bekannt ein Strukturelement, d.h. ein Verstärkungselement, in einem Bereich zwischen einer Außen- und einer Innenschale anzuordnen, insbesondere bei einer Kraftfahrzeugkarosserie in Schalenbauweise. Das Strukturelement kann dabei aus einem faserverstärkten Kunststoff, wie beispielsweise kohlefaserverstärkten Kunststoff, bestehen, während die Innen- und/oder Außenschale aus einem Stahl bestehen kann. Das Strukturelement wird dabei mittels eines Verbindungsklebers durch eine flächige Verbindung mit der Außen- und/oder Innenschale verbunden. Ein derartiges Bauteil in Schalenbauweise mit einem Strukturelement ist in der DE 102007010341 A1 beschrieben.

Die EP 1946995 A1 zeigt ein Karosserieelement mit einem Hohlraum, in dem beabstandet zu einem inneren Umfang des Hohlraums ein Trägerelement eingebracht ist. In dem Trägerelement sind Kanäle angeordnet, mittels denen Klebstoff zwischen dem Trägerteil und dem Karosserieelement eingebracht werden kann. Eine Außenseite des Trägerelements wird vollständig mit einer Innenseite des Karosserieelements mittels des Klebstoffs verbunden.

Es ist nunmehr die Aufgabe der vorliegenden Erfindung ein Verfahren zum Herstellen eines Verbundbauteils sowie ein entsprechendes Verbundbauteil zu schaffen, wobei das Verbundbauteil leichter ist und wobei eine Klebeverbindung geringeren Spannungen durch unterschiedliche Wärmeausdehnungskoeffizienten des ersten Bauteilelements und des zweiten Bauteilelements ausgesetzt ist.

Diese Aufgabe wird durch ein Verfahren gelöst, das die Kombination der Merkmale von Patentanspruch 1 aufweist. Ferner wird diese Aufgabe durch ein Verbundbauteil gelöst, das die Merkmale von Patentanspruch 11 aufweist.

Gemäß der vorliegende Offenbarung hat das Verfahren zum Herstellen eines Verbundbauteils mit einem ersten Bauteilelement und einem zweiten Bauteilelement, die durch eine Klebeverbindung miteinander verbunden sind, den Schritt
- Ausbilden eines Klebehohlraums mit folgenden Unterschritten:
   - Aufbringen von thermisch aktiven Kunststoff auf eine Klebeverbindungsseite des ersten Bauteilelements oder/und auf eine Klebeverbindungsseite des zweiten Bauteilelements,
   - Anordnen des ersten Bauteilelements an dem zweiten Bauteilelement, wobei ein Spalt zwischen der Klebeverbindungsseite des ersten Bauteilelements und der Klebeverbindungsseite des zweiten Bauteilelements ausgebildet ist, und
   - Zuführen von Wärme auf eine Art und Weise, dass sich der thermisch aktive Kunststoff ausdehnt und eine Abgrenzung in dem Spalt zwischen dem ersten Bauteilelement und dem zweiten bildet, und Ferner hat das Verfahren den Schritt:
- Füllen des ausgebildeten Klebehohlraums mit Klebemittel zum dauerhaften Verbinden des ersten Bauteilelements mit dem zweiten Bauteilelement.

Der Klebehohlraum bildet eine lokal begrenzte Klebestelle bzw. Klebeverbindungsstelle, die eine Klebeverbindung zwischen dem ersten Bauteilelement und dem zweiten Bauteilelement bildet. Der thermisch aktive Kunststoff bildet nach seiner Ausdehnung eine Wand, die sich in dem Spalt zwischen dem ersten Bauteilelement und dem zweiten Bauteilelement erstreckt. Der Spalt ist ein Zwischenraum zwischen dem ersten Bauteilelement und dem zweiten Bauteilelement.

Es werden mehrere Klebehohlräume und damit Klebestellen in dem Verbundbauteil ausgebildet.

Durch das offenbarte Verfahren können das ersten Bauteilelement und das zweite Bauteilelement an einer zuvor definierten lokalen Stelle einfach mit einer Klebeverbindung verbunden werden. Zudem ermöglicht dieses Verfahren lokal begrenzte Klebeverbindungen zu schaffen. Damit wird Klebemittel lediglich an lokal begrenzten Stellen, d.h. an lokalen Klebestellen, aufgebracht. Es muss also nicht der gesamte Spalt zwischen dem ersten Bauteilelement und dem zweiten Bauteilelement mit Klebemittel gefüllt werden. Dies spart Material, Gewicht und Kosten. Außerdem ermöglicht das vorliegende Verfahren durch die Zuführung von Wärme, dass das zweite Bauteilelement an dem ersten Bauteilelement durch Ausdehnung des thermisch aktiven Kunststoffs vorfixiert wird. Dies hat den Vorteil, dass erste Bauteilelement mit dem zweiten Bauteilelement noch weitere Prozesse durchlaufen kann, bis die eigentliche Klebeverbindung zum Verbinden des zweiten Bauteilelements mit dem ersten Bauteilelement hergestellt wird. Besonders vorteilhaft ist dies, wenn das erste Bauteilelement und das zweite Bauteilelement gemeinsam sowieso Prozessschritte durchlaufen müssen, die eine Erwärmung des ersten Bauteilelements zusammen mit dem zweiten Bauteilelement erfordern. Eine derartige Erwärmung des zweiten Bauteilelements mit dem ersten Bauteilelement mit fertig ausgebildeter Klebeverbindung wäre jedoch unvorteilhaft, da eine Klebeverbindung nur in bestimmten Grenzen wärmestabil ist.

Bevorzugt ist bei dem vorliegenden Verfahren das erste Bauteilelement aus einem ersten Werkstoff gebildet und das zweite Bauteilelement ist aus einem zweiten Werkstoff gebildet. Der erste Werkstoff und der zweite Werkstoff sind unterschiedliche Werkstoffe.

Insbesondere weisen der erste Werkstoff und der zweite Werkstoff unterschiedliche thermische Längenausdehnungskoeffizienten auf.

Bei zwei Werkstoffen mit unterschiedlichen Längenausdehnungskoeffizienten ist es besonders vorteilhaft, eine Klebeverbindung zu schaffen, die elastischer ist als eine Verbindung mit mechanischen, formschlüssigen Verbindungsmitteln wie Bolzen, beispielsweise Schrauben oder Nieten.

Besonders bevorzugt ist der erste Werkstoff aus einem Kunststoff ausgebildet, wobei der zweite Werkstoff aus einem metallischen Werkstoff ausgebildet ist. Bei dieser Werkstoffpaarung ergibt sich in vielen Fällen das Problem unterschiedlicher Längenausdehnungskoeffizienten, das jedoch mit der vorliegenden Erfindung angemessen gelöst werden kann.

Selbstverständlich sind auch andere Werkstoffpaarungen, die aus dem ersten Werkstoff und dem zweiten Werkstoff gebildet sind, möglich. Z.B. kann das erste Bauteilelement aus Stahl, Aluminium oder Kunststoff, z.B. faserverstärktem Kunststoff, bestehen. Das zweite Bauteilelement kann wiederum aus Aluminium, Kunststoff, z.B. faserverstärktem Kunstsoff, Stahl oder Magnesium bestehen.

Bevorzugt wird ferner der thermisch aktive Kunststoff derart aufgebracht, dass der thermisch aktive Kunststoff zumindest nach dem Schritt Zuführen von Wärme, bei dem sich der thermisch aktive Kunststoff ausdehnt, eine geschlossene Abgrenzung in dem Spalt bildet.

Der thermisch aktive Kunststoff kann damit mit Unterbrechungen aufgebracht werden, wobei diese Unterbrechungen durch die Ausdehnung des thermisch aktiven Kunststoffes bei der Zuführung von Wärme geschlossen werden und damit eine geschlossene Raupe bilden.

Alternativ kann der thermisch aktive Kunststoff bereits beim Aufbringen in Form einer geschlossenen Raupe, die die Abgrenzung bildet, ausgebildet werden.

Gemäß der vorliegenden Offenbarung wird weiterhin in dem Schritt "Zuführen von Wärme" Prozesswärme bei einem Beschichtungsschritt des Verbundbauteils zugeführt.

Insbesondere ist die Wärme Prozesswärme, die zum Trocknen der Beschichtung notwendig ist, und die für das Zuführen von Wärme, um den thermisch aktiven Kunststoff zu aktivieren, zusätzlich genutzt wird.

Somit kann einerseits die Prozesswärme zur Vorfixierung des zweiten Bauteilelements an dem ersten Bauteilelement genutzt werden und andererseits kann das Füllen des Klebehohlraums mit Klebemittel nach dem Zuführen von Prozesswärme durchgeführt werden, so dass die Prozesswärme zum Trocknen der Beschichtung hinsichtlich der Klebeverbindung keine nachteilige Wirkung hat. Bevorzugt wird die Beschichtung in einem Tauchverfahren auf das Verbundbauteil aufgebracht. Es sind jedoch auch andere Beschichtungsverfahren im Zusammenhang mit der vorliegenden Erfindung möglich.

Bevorzugt ist das erste Bauteilelement ein Hohlprofil und das zweite Bauteilelement ein Verstärkungselement, das innerhalb des Hohlprofils angeordnet ist, wobei bei dem Schritte Ausbilden des Klebehohlraums der thermisch aktive Kunststoff auf eine Außenseite des Verstärkungselements oder/und auf eine Innenseite des Hohlprofils aufgebracht wird.

Das Hohlprofil kann ferner aus einem ersten Hohlprofilbauteil und einem zweiten Hohlprofilbauteil bestehen.

Dies erleichtert ein Einbringen des Verstärkungselements in das Hohlprofil. Z.B. kann das Verstärkungselement zunächst in das erste Hohlprofilbauteil eingelegt werden und danach das zweite Hohlprofilbauteil an das erste Hohlprofilbauteil angefügt werden.

Das Hohlprofil kann auch aus mehr als zwei Hohlprofilbauteilen bestehen.

Bevorzugt wird bei dem Schritt "Anordnen des Verstärkungselements in dem Hohlprofil" das Verstärkungselement in dem ersten Hohlprofilbauteil angeordnet und dann wird das erste Hohlprofilbauteil mit dem zweiten Hohlprofilbauteil verbunden.

Besonders bevorzugt ist das Verbundbauteil ein tragendes Teil einer Kraftfahrzeugkarosserie.

Das erste Bauteilelement, z.B. das Hohlprofil, und das zweite Bauteilelement, z.B. das Verstärkungselement, können beliebige Formen und Querschnitte aufweisen. Zum Beispiel im Falle des Einsatzes des Verbundbauteils in einer Kraftfahrzeugkarosserie können das erste Bauteilelement und das zweite Bauteilelement dort übliche Formen und Querschnitte aufweisen, um bestimmte Anforderungen an Steifigkeit und Festigkeit zu erfüllen.

Der thermisch aktive Kunststoff gemäß der vorliegenden Erfindung kann ein dauerelastischer Schaum, beispielsweise aus Ethylen-Vinylacetat oder Ethylen-Butylacrylat bestehend, sein.

Ferner wird vorstehende Aufgabe durch ein Verbundbauteil gelöst, dass die Merkmale von Patentanspruch 11 aufweist.

Ein Verbundbauteil gemäß der vorliegenden Offenbarung hat ein erstes Bauteilelement und ein zweites Bauteilelement, die über eine Klebeverbindung miteinander verbunden sind. Zwischen dem ersten Bauteilelement und dem zweiten Bauteilelement ist ein Spalt ausgebildet, in dem zumindest ein lokal begrenzter Klebehohlraum ausbildet ist, der durch eine Klebeverbindungsseite des ersten Bauteilelements, eine Klebeverbindungsseite des zweiten Bauteilelements sowie zumindest eine Wand aus thermisch aktivierten Kunststoff begrenzt ist. Der Klebehohlraum ist mit Klebemittel zum dauerhaften Verbinden des ersten Bauteilelements mit dem zweiten Bauteilelement gefüllt.

Der Spalt ist ein Zwischenraum zwischen dem ersten Bauteilelement und dem zweiten Bauteilelement.

Das Verbundbauteil kann ferner derart weitergebildet sein, wie es in Zusammenhang mit dem Verfahren zum Herstellen eines Verbundbauteils erläutert ist.

Nachstehend erfolgt eine Kurzbeschreibung der Figuren.
- Fig. 1: ist eine schematische Perspektivansicht eines Verbundbauteils gemäß einem ersten Ausführungsbeispiel der vorliegenden Offenbarung mit einer ersten Variante eines Klebehohlraums.
- Fig. 2: ist eine schematische Schnittansicht eines Hohlprofils des Verbundbauteils gemäß dem ersten Ausführungsbeispiel der vorliegenden Erfindung, in dem ein Verstärkungselement angeordnet ist.
- Fig. 3: ist eine schematische Schnittansicht des Hohlprofils des Verbundbauteils gemäß dem ersten Ausführungsbeispiel der vorliegenden Erfindung, in dem das Verstärkungselement angeordnet ist, wobei thermisch aktiver Kunststoff auf das Verstärkungselement aufgetragen ist.
- Fig. 4: ist eine schematische Schnittansicht des Hohlprofils, in dem das Verstärkungselement gemäß einer Abwandlung des ersten Ausführungsbeispiels der vorliegenden Erfindung angeordnet ist, wobei thermisch aktiver Kunststoff auf das Hohlprofil gemäß einer Abwandlung des ersten Ausführungsbeispiels der vorliegenden Erfindung, aufgetragen ist.
- Fig. 5: ist eine schematische Schnittansicht des Hohlprofils, in dem das Verstärkungselement gemäß der ersten Variante des ersten Ausführungsbeispiels der vorliegenden Erfindung angeordnet ist.
- Fig. 6: ist eine schematische Schnittansicht des Hohlprofils, in dem das Verstärkungselement gemäß einer zweiten Variante des ersten Ausführungsbeispiels der vorliegenden Erfindung angeordnet ist.
- Fig. 7: ist eine schematische Schnittansicht des Hohlprofils, in dem das Verstärkungselement gemäß einer dritten Variante des ersten Ausführungsbeispiels der vorliegenden Erfindung angeordnet ist.
- Fig. 8: ist eine schematische Perspektivansicht des Verbundbauteils gemäß dem ersten Ausführungsbeispiel mit einer Abwandlung der dritten Variante des Klebehohlraums.
- Fig. 9: ist eine schematische Perspektivansicht des Verbundbauteils gemäß einer vierten Variante des ersten Ausführungsbeispiels.
- Fig. 10: ist eine schematische Perspektivansicht eines Verbundbauteils gemäß einem zweiten Ausführungsbeispiel.

Nachstehend erfolgt eine Beschreibung der Ausführungsbeispiele der vorliegenden Offenbarung.

Zunächst ist ein Verfahren gemäß einem ersten Ausführungsbeispiel der vorliegenden Offenbarung zum Herstellen eines Verbundbauteils 1 aus einem Hohlprofil 3, das ein erstes Bauteilelement bildet, beispielsweise aus einem metallischen Werkstoff, und einem Verstärkungselement 5, das ein zweites Bauteilelement bildet, beispielsweise aus einem faserverstärktem Kunststoff, beschrieben. Das Hohlprofil 3 und das Verstärkungselement 5 haben Längenausdehnungskoeffizienten mit einem konstruktiv relevanten Unterschied.

Das Verbundbauteil gemäß dem ersten Ausführungsbeispiel ist Teil einer Kraftfahrzeugkarosserie. Insbesondere ist das Verbundbauteil ein tragendes Teil der Kraftfahrzeugkarosserie, das eine Funktion zur Versteifung der Karosserie sowie eine Funktion zur Energieabsorption in einem Lastfall aufweist.

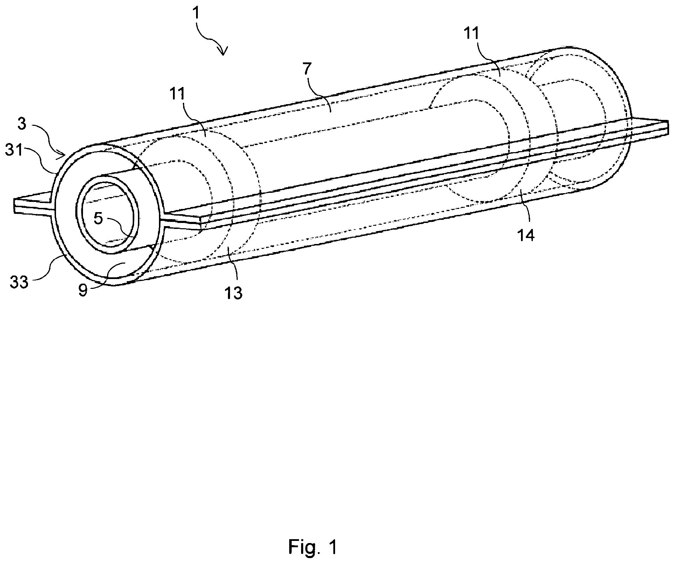

Fig. 1 ist eine schematische Perspektivansicht des Verbundbauteils 1 gemäß dem ersten Ausführungsbeispiel der vorliegenden Offenbarung mit einer ersten Variante eines Klebehohlraums 7. Das Verstärkungselement 5 ist ein kreiszylindrischer hohler Stab, beispielsweise aus faserverstärktem Kunststoff. Das Verstärkungselement 5 ist in dem Hohlprofil 3 angeordnet, das aus einem ersten und einem zweiten Hohlprofilbauteil 31, 33 besteht, die über Flansche miteinander verbunden sind und die zusammen einen kreiszylindrischen Hohlraum oder Spalt 9 bilden. Zwischen dem Hohlprofil 3 und dem Verstärkungselement 5 ist der Klebehohlraum 7 ausgebildet. Der Klebehohlraum 7 befindet sich in dem Spalt 9, der zwischen dem Hohlprofil 3 und dem Verstärkungselement 5 ausgebildet ist. Der Klebehohlraum 7 ist durch das Hohlprofil 3, das Verstärkungselement 5, einen ersten Ring 13 und einen zweiten Ring 14 aus thermisch aktiviertem Kunststoff 11 begrenzt. Der thermisch aktivierte Kunststoff 11 besteht aus aufgeschäumtem Kunststoff, der eine Breite des Spalts 9, d.h. einen Abstand zwischen dem Hohlprofil 3 und dem Verstärkungselement 5, vollständig ausfüllt. In den Klebehohlraum 7 ist Klebemittel eingespritzt, wobei das Klebemittel in Fig. 1 nicht dargestellt ist. Als thermisch aktiver Kunststoff 11 ist im vorliegenden Ausführungsbeispiel ein dauerelastischer Schaum aus Ethylen-Vinylacetat oder Ethylen-Butylacrylat verwendet. Es kann aber auch anderer geeigneter thermisch aktiver Kunststoff verwendet sein.

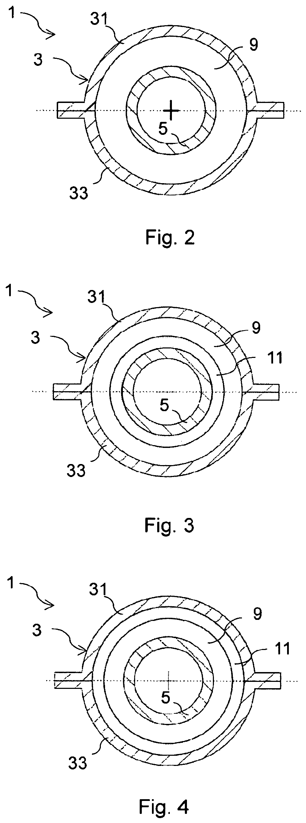

Fig. 2 ist eine schematische Schnittansicht des Hohlprofils 3, in dem das Verstärkungselement 5 angeordnet ist. Zwischen dem Hohlprofil 3 und dem Verstärkungselement 7 ist der ringförmige Spalt 9 gezeigt. In dem Zustand von Fig. 2 ist kein Klebemittel oder thermisch aktiver bzw. thermisch aktivierter Kunststoff in dem Spalt 9 vorhanden.

Im Folgenden ist ein Verfahren zum Herstellen des in Fig. 1 gezeigten Verbundbauteils 1 gemäß dem ersten Ausführungsbeispiel der vorliegenden Offenbarung in Einzelheiten beschrieben.

Zunächst wird der Klebehohlraum 7 ausgebildet. Hierfür wird thermisch aktiver Kunststoff 11 an geeigneten Stellen auf das Hohlprofil 3 oder/und das Verstärkungselement 5 aufgetragen, wie im Folgenden in Bezug auf Figuren 3 und 4 erläutert ist.

In Figuren 3 und 4 sind Möglichkeiten gezeigt, wo gemäß dem vorliegenden Ausführungsbeispiel der thermisch aktive Kunststoff 11 aufgebracht werden kann. Insbesondere wird, bevor das Verstärkungselement 5 in dem Hohlprofil 3 angeordnet wird, an Orten, an denen eine Begrenzung einer auszubildenden Klebeverbindung ausgebildet werden soll, eine Raupe aus thermisch aktivem Kunststoff 11 aufgetragen. Der thermisch aktive Kunststoff 11 wird entweder gemäß Fig. 3 an einer Innenseite des Hohlprofils 3 aufgetragen oder wird in Abwandlung gemäß Fig. 4 an einer Außenseite des Verstärkungselements 5 in Form einer Raupe aufgetragen. Es ist natürlich auch möglich die Raupe oder Teile der Raupe an beiden Hohlprofilelementen aufzutragen.

Beim Aneinanderfügen des Verstärkungselements 5 und der zwei Hohlprofilbauteile 31, 33 kann der thermisch aktive Kunststoff 11 bereits eine Vorverbindung zwischen dem Verstärkungselement 5 und den Hohlprofilbauteilen 31, 33 ausbilden, so dass die Lage des Hohlprofils 3 gegenüber dem Verstärkungselement 5 vorfixiert ist.

Alternativ kann die Vorverbindung zwischen dem Hohlprofil 3 und dem Verstärkungselement 5 auch erst nach einem Aktivieren des thermisch aktiven Kunststoffes 11 ausgebildet werden.

Nach dem Aufbringen des thermisch aktiven Kunststoffes 11 wird dann das Verstärkungselement 5 z.B. in dem Hohlprofilbauteil 31 angeordnet. Daraufhin wird das Hohlprofilbauteil 33 an das Hohlprofilbauteil 31 gefügt. Nach Bedarf sind geeignete Abstandhalter in Verwendung, die eine Position des Verstärkungselements 5 gegenüber dem Hohlprofil 3, d.h. den Hohlprofilbauteilen 31 und 33, bestimmen.

In diesem Zustand ist der Klebehohlraum 7 noch nicht vollständig ausgebildet. Insbesondere verschließt der thermisch aktive Kunststoff 11 den Spalt 9 noch nicht vollständig. Es können noch Freiräume vorhanden sein, die den Klebeholraum 7 mit dem übrigen Spalt 9 verbinden.

Dann durchläuft das so ausgebildete Roh-Verbundbauteil, d.h. das unfertige Verbundbauteil, mit dem Hohlprofil 3, dem Verstärkungselement 5 und dem nicht aktivierten Kunststoff 11 zusammen mit der Kraftfahrzeugkarosserie einen Beschichtungsprozess, zum Beispiel einen Tauchlackierprozess. Dabei ist es möglich, dass ein Beschichtungsmittel in den Klebehohlraum 7 vordringt, da der thermisch aktive Kunststoff 11 den Spalt 9 noch nicht vollständig schließt. Dies wäre nicht möglich, wenn schon vor dem Tauchlackierprozess eine Klebeverbindung vollständig ausgebildet worden wäre. D.h. das Beschichtungsmittel könnt im Bereich der Klebeverbindung die Elemente des Roh-Verbundbauteils nicht benetzen.

Um das Beschichtungsmittel auf der Kraftfahrzeugkarosserie und damit auf dem Roh-Verbundbauteil zu Fixieren, durchläuft die Kraftfahrzeugkarosserie mit dem Bauteil einen Trocknungsprozess mit Wärmeeintrag, z.B. einen Kathodentauchlackiertrockner (KTL-Trockner). Hierbei wird die Kraftfahrzeugkarosserie durch die sowieso für den Trocknungsprozess vorhandene Wärme mit dem Roh-Verbundbauteil soweit erhitzt, dass der thermisch aktive Kunststoff 11 aktiviert wird, aufschäumt und sich damit ausdehnt.

Hierdurch wird der Spalt 9 zwischen Hohlprofil 3 und dem Verstärkungselement 5 an den Stellen, an denen der thermisch aktive Kunststoff 11 vorhanden ist, geschlossen.

Im Falle des in Fig. 1 gezeigten Verbundbauteils 1 ist dann ein Klebehohlraum 7 durch einen ersten Ring 13 und einen zweiten Ring 14 aus thermisch aktiviertem Kunststoff 11 sowie die Innenseite des Hohlprofils 3 und die Außenseite des Verstärkungselements 5 ausgebildeter Klebehohlraum 7 gebildet. Weiterhin ist in diesem Zustand das Verstärkungselement 5 bereits verhältnismäßig fest in dem Hohlprofil 3 fixiert.

Der Wärmeeintrag in dem Trocknungsprozess des KTL-Trockners ist so hoch, dass eine zu diesem Zeitpunkt schon vorhandene Klebeverbindung den Wärmeeintrag nicht schadlos überstehen würde. Ferner würde beim Vorhandensein einer formschlüssigen Verbindung mittels Bolzen, diese Verbindung durch die unterschiedlichen Wärmeausdehnungskoeffizienten des Hohlprofils 3 und des Verstärkungselements 5 eine Überbeanspruchung der formschlüssigen Verbindung stattfinden, die nur mit aufwendigen konstruktiven Maßnahmen zu umgehen wäre. Die Vorfixierung des Verstärkungselements 5 an dem Hohlprofil 3 mittels des thermisch aktivierten Kunststoffs 11, d.h. des aufgeschäumten Kunststoffes mit einer verhältnismäßig hohen Elastizität, ermöglicht jedoch eine relative Verschiebung des Verstärkungselements 5 gegenüber dem Hohlprofil 3 durch deren unterschiedliche Wärmeausdehnung.

Wenn die Kraftfahrzeugkarosserie mit dem Hohlprofil 3 und dem Verstärkungselement 5 den Beschichtungsprozess durchlaufen hat, insbesondere wenn die Kraftfahrzeugkarosserie die temperaturintensiven Prozesse durchlaufen hat, kann die eigentliche dauerhafte Klebeverbindung zwischen dem Hohlprofil 3 und dem Verstärkungselement 5 hergestellt werden.

Wie aus dem oben beschriebenen Verfahren zum Ausbilden des Klebehohlraums 7 ersichtlich ist, muss die Anwendung des thermisch aktiven Kunststoffes so gewählt werden, dass durch einen Ausdehnungsgrad, einen Anwendungsquerschnitt, also im vorliegenden Ausführungsbeispiel der Spalt 9, und einer geometrische Lage der Elemente des Roh-Verbundbauteils, der zu schließende Spalt 9 zwischen dem Hohlprofil 3 und dem Verstärkungselement 5 durch Expansion in dem Temperaturprozess des Beschichtungsprozesses geschlossen wird. Der thermisch aktive Kunststoff 11 ist ferner so zu wählen, dass er den Temperaturprozess und die dadurch entstehenden Relativbewegungen zwischen dem Verstärkungselement 5 und dem Hohlprofil 3, die aus den Werkstoffen mit den unterschiedlichen Wärmeausdehnungskoeffizienten bestehen, unbeschadet überstehen kann. Es kommt also bei der Anwendung des thermisch aktiven Kunststoffes 11 auf die Menge, die Form der Raupe und selbstverständlich auf das Material des thermisch aktiven Kunststoffes 11 an.

Zur Herstellung der Klebeverbindung wird dann in den Klebehohlraum 7 ein Klebemittel eingespritzt. Da der Klebehohlraum 7 im Wesentlichen durch den ersten Ring 13, den zweiten Ring 14, das Hohlprofil 3 und das Verstärkungselement 5 begrenzt ist, ist der Raum für das Klebemittel auf den Klebehohlraum 7 begrenzt und dringt nicht in andere, nicht dafür vorgesehene Bereiche des Spalts 9 zwischen dem Hohlprofil 3 und dem Verstärkungselement 5 ein.

Für die Einspritzung des Klebemittels wird entweder eine vor Ausbildung des Klebehohlraums 7 geschaffene Befüllöffnung, z.B. in dem Hohlprofil 3, verwendet oder die Befüllöffnung wird nach Ausbildung des Klebehohlraums 7 durch beispielsweise Bohren eingebracht.

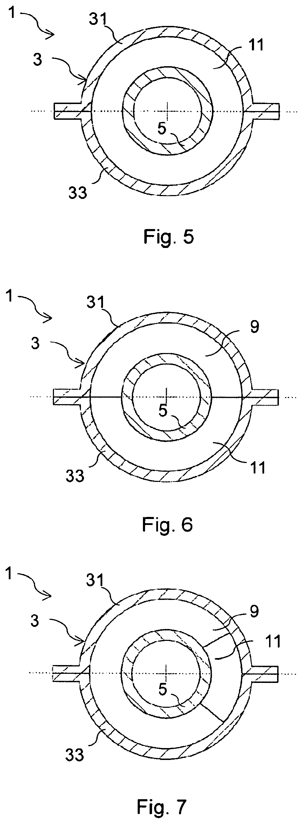

In Fig. 1 ist eine erste Variante des ersten Ausführungsbespiels für eine Klebeverbindung mit einem Klebehohlraum 7 in dem Verbundbauteil 1 gezeigt. Fig. 5 zeigt eine Schnittansicht dieser ersten Variante, wobei der Schnitt durch einen der beiden Ringe 13, 14 verläuft.

Die Klebeverbindung mit dem Klebehohlraum 7 kann jedoch je nach geometrischer Beschaffenheit der Bauteile des Verbundbauteils 1 und den Anforderungen an die Klebeverbindung jeweils angepasst ausgebildet werden.

Weitere Varianten hinsichtlich der Klebeverbindung des Verbundbauteils 1 gemäß dem ersten Ausführungsbeispiel sind in Figuren 6 bis 9 gezeigt.

Fig. 6 ist eine schematische Schnittansicht des Verbundbauteils 1 des ersten Ausführungsbeispiels mit einer zweiten Variante des Klebehohlraums 7. Hierbei ist der Klebehohlraum 7 lediglich zwischen dem Hohlprofilbauteil 31 und dem Verstärkungselement 5 ausgebildet. Der Klebehohlraum 7 ist hier also nicht über den gesamten Umfang des ringförmigen Spalts 9 sondern nur als ein Sektor des ringförmigen Spalts 9, insbesondere über eine Hälfte des Umfangs des ringförmigen Spalts 9, ausgebildet.

Fig. 7 ist eine schematische Schnittansicht des Verbundbauteils 1 des ersten Ausführungsbeispiels mit einer dritten Variante des Klebehohlraums 7. Hierbei ist der Klebehohlraum 7 zwischen dem Hohlprofilbauteil 31, dem Hohlprofilbauteil 33 und dem Verstärkungselement 5 jedoch nicht über den gesamten Umfang des Spalts 9 sondern über weniger als ein Viertel des Umfangs des Spalts 9, ausgebildet. Ein Sektor des ringförmigen Spalts 9, in dem der Klebehohlraum 7 der dritten Variante ausgebildet ist, erstreckt sich hier über beide Hohlprofilbauteile 31 und 33 jedoch nicht über den gesamten Umfang des Spalts 9.

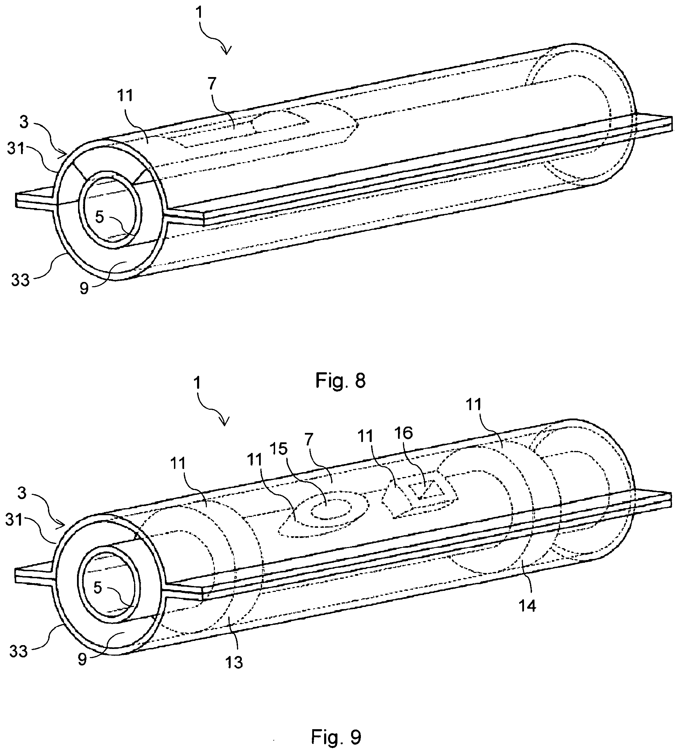

Fig. 8 ist eine schematische Perspektivansicht des Verbundbauteils 1 gemäß dem ersten Ausführungsbeispiel der vorliegenden Offenbarung mit einer Abwandlung der dritten Variante des Klebehohlraums 7. In der Perspektivansicht ist zu erkennen, dass der thermisch aktive Kunststoff 11 eine geschlossene Raupe bildet, die sich abschnittsweise in radialer Richtung und in axialer Richtung des Verstärkungselements 5 bzw. des ringförmigen Spalts 9 erstreckt, wie das auch in der dritten Variante des ersten Ausführungsbeispiels von Fig. 7 der Fall ist, jedoch in der Schnittansicht nicht zu sehen ist. Im Gegensatz zu der dritten Variante des ersten Ausführungsbeispiels von Fig. 7 ist die geschlossene Raupe des thermisch aktiven Kunststoffes nur zwischen dem Hohlprofilbauteil 31 und dem Verstärkungselement 5 ausgebildet.

Fig. 9 ist eine schematische Perspektivansicht des Verbundbauteils 1 gemäß dem ersten Ausführungsbeispiel der vorliegenden Offenbarung mit einer vierten Variante des Klebehohlraums 7. In der Perspektivansicht ist zu erkennen, dass der thermisch aktive Kunststoff 11 zwei Ringe 13, 14 ausgebildet hat. Insoweit stimmt die vierte Variante des ersten Ausführungsbeispiels mit der ersten Variante (siehe Fig. 1) des ersten Ausführungsbeispiels überein. Der Klebehohlraum 7 der vierten Variante weist zusätzliche Aussparungsabschnitte 15, 16 in dem Klebehohlraum 7 auf. Die Aussparungsabschnitte 15, 16 sind mittels Begrenzungen aus thermisch aktiven Kunststoff 11 derart ausgebildet, dass beim Einspritzen von Klebemittel in den Klebehohlraum 7 die Aussparungsabschnitte 15 nicht mit Klebemittel gefüllt werden.

Der Aussparungsabschnitt 15 hat eine ovale Form, während der Aussparungsabschnitt 16 eine eckige Form hat. Jegliche andere Form des Aussparungsabschnitts ist denkbar.

In dem vorliegenden ersten Ausführungsbeispiel sind das Hohlprofil 3 und das Verstärkungselement 5 rohrförmig ausgeführt. Dies dient lediglich einer einfacheren Erläuterung des Prinzips der Erfindung. Selbstverständlich können das Hohlprofil 3 und das Verstärkungselement 5 auch andere Formen und Querschnitte mit im Karosseriebau üblichen komplizierten geometrischen Formen aufweisen. Im Übrigen kann das Hohlprofil 3 auch aus nur einem Teil oder aus mehr als zwei Teilen bestehen. Ferner könnte auch das Verstärkungselement 5 aus mehreren Teilen bestehen.

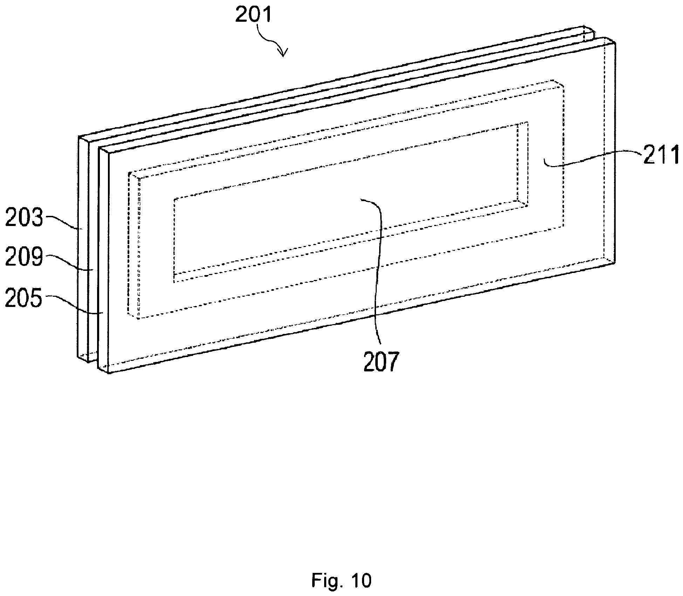

Insbesondere können gemäß einem zweiten Ausführungsbeispiel der vorliegenden Offenbarung das in Fig. 10 gezeigt ist, auch zwei plattenförmige Bauteilelemente 203 und 205 mit dem Verfahren zu einem Verbundbauteil 201 miteinander verbunden werden.

Das erste plattenförmige Bauteilelement 203 ist mit seiner Klebeverbindungsseite gegenüberliegend einer Klebeverbindungsseite eines zweiten plattenförmigen Bauteilelements 205 angeordnet, wobei ein Spalt 209 zwischen dem ersten Bauteilelement 203 und dem zweiten Bauteilelement 205 ausgebildet ist.

In dem Spalt 209 ist eine Klebehohlraum 207 ausgebildet, der durch die Klebeverbindungsseite des ersten plattenförmigen Bauteilelements 203 und die Klebeverbindungsseite des zweiten plattenförmigen Bauteilelements 205 sowie durch eine Wand aus thermisch aktiviertem Kunststoff 211 begrenzt ist. Die Wand ist in Form eines geschlossenen Rechtecks ausgebildet. Es sind selbstverständlich andere Ausbildungen der Wand möglich. Die Wand erstreckt sich über die gesamte Höhe des Spalts 209 zwischen dem ersten plattenförmigen Bauteilelement 203 und dem zweiten plattenförmigen Bauteilelement 205.

Der Klebehohlraum 207 ist mit einem Klebemittel gefüllt, das eine dauerhafte Verbindung zwischen dem ersten und dem zweiten Bauteilelement 203 und 205 herstellt.

Ein Verfahren zum Herstellen des Verbundbauteils 201 gemäß dem zweiten Ausführungsbeispiel funktioniert analog dem Verfahren zum Herstellen des Verbundbauteils 1 des ersten Ausführungsbeispiels, so das es hier nicht weiter erläutert ist. Im Unterschied werden bei dem Verbundbauteil 201 das erste und das zweite Bauteilelement 203 und 205 nicht ineinander sondern aneinander angeordnet und das erste Bauteilelement 203 besteht lediglich aus einem Bauteil und nicht aus zwei Bauteilen wie bei dem ersten Ausführungsbeispiel.

## Patentansprüche

1. Verfahren zum Herstellen eines Verbundbauteils (1) mit einem ersten Bauteilelement (3) und einem zweiten Bauteilelement (5), die durch Klebeverbindungen miteinander verbunden sind, wobei das erste Bauteilelement ein Hohlprofil (3) und das zweite Bauteilelement ein Verstärkungselement (5) ist, das innerhalb des Hohlprofils (3) angeordnet ist, wobei das Verfahren folgende Schritte aufweist
- Ausbilden mehrerer Klebehohlräume (7), wobei
- thermisch aktiver Kunststoff (11) auf eine Klebeverbindungsseite des ersten Bauteilelements (3) oder/und auf eine Klebeverbindungsseite des zweiten Bauteilelements (5) aufgebracht wird,
- das erste Bauteilelement (3) und das zweite Bauteilelement (5) aneinander gegenüberliegend angeordnet werden, wobei ein Spalt (9) zwischen der Klebeverbindungsseite des ersten Bauteilelements (3) und der Klebeverbindungsseite des zweiten Bauteilelements (5) ausgebildet ist, und
- Wärme derart zugeführt wird, dass sich der thermisch aktive Kunststoff (11) ausdehnt und ringförmige Abgrenzungen in dem Spalt (9) zwischen dem ersten Bauteilelement (3) und dem zweiten Bauteilelement (5) bildet,
- wobei die Klebehohlräume (7) ringförmig lokal begrenzt ausgebildet werden, so dass diese lediglich einen Teil des Spalts (9) zwischen dem ersten Bauteilelement (3) und dem zweiten Bauteilelement (5) füllen, und
- Füllen der ausgebildeten Klebehohlräume (7) mit Klebemittel zum Verbinden des ersten Bauteilelements (3) mit dem zweiten Bauteilelement (5).

2. Verfahren nach Patentanspruch 1, wobei das erste Bauteilelement (3) aus einem ersten Werkstoff gebildet ist und das zweite Bauteilelement (5) aus einem zweiten Werkstoff gebildet ist, und wobei beispielsweise der erste Werkstoff und der zweite Werkstoff unterschiedliche thermische Längenausdehnungskoeffizienten aufweisen.

3. Verfahren nach Patentanspruch 2, wobei der erste Werkstoff ein Kunststoff, insbesondere faserverstärkt, ist und der zweite Werkstoff ein metallischer Werkstoff ist.

4. Verfahren nach einem der Patentansprüche 1 bis 3, wobei der thermisch aktive Kunststoff (11) derart aufgebracht wird, dass der thermisch aktive Kunststoff (11) zumindest nach dem Schritt Zuführen von Wärme eine geschlossene Abgrenzung in dem Spalt (9) bildet.

5. Verfahren nach einem der Patentansprüche 1 bis 4, wobei die Wärme in einem Beschichtungsschritt des Verbundbauteils (1) zugeführt wird, und wobei die Wärme insbesondere Prozesswärme für ein Trocknen der Beschichtung ist.

6. Verfahren nach Patentanspruch 5, wobei die Beschichtung in einem Tauchverfahren auf das Verbundbauteil (1) aufgebracht wird.

7. Verfahren nach einem der Patentansprüche 1 bis 6, wobei bei dem Schritt Ausbilden des Klebehohlraums (7) der thermisch aktive Kunststoff (11) auf eine Außenseite des Verstärkungselements (5) oder/und auf eine Innenseite des Hohlprofils (3) aufgebracht wird.

8. Verfahren nach einem der Patentanspruch 7, wobei das Hohlprofil (3) zumindest aus einem ersten Hohlprofilbauteil (31) und einem zweiten Hohlprofilbauteil (33) besteht.

9. Verfahren nach Patentanspruch 8, wobei bei dem Schritt Anordnen des Verstärkungselements in dem Hohlprofil (3), das erste Verstärkungselement (5) in dem ersten Hohlprofilbauteil (31) angeordnet wird und dann das erste Hohlprofilbauteil (31) mit dem zweiten Hohlprofilbauteil (33) verbunden wird.

10. Verfahren nach einem der Patentansprüche 1 bis 9, wobei das Verbundbauteil (1) ein tragendes Teil einer Kraftfahrzeugkarosserie ist.

11. Verbundbauteil (1) mit einem ersten Bauteilelement (3) und einem zweiten Bauteilelement (5), die über Klebeverbindungen miteinander verbunden sind, wobei das erste Bauteilelement ein Hohlprofil (3) und das zweite Bauteilelement ein Verstärkungselement (5) ist, das innerhalb des Hohlprofils (3) angeordnet ist, wobei zwischen dem ersten Bauteilelement (3) und dem zweiten Bauteilelement (5) ein Spalt (9) ausgebildet ist, in dem mehrere ringförmige und lokal begrenzte Klebehohlräume (7) ausgebildet sind, die durch eine Klebeverbindungsseite des ersten Bauteilelements (3), eine Klebeverbindungsseite des zweiten Bauteilelements (5) sowie ringförmige Wände aus thermisch aktivierten Kunststoff (11) begrenzt sind, und wobei die Klebehohlräume (7) mit Klebemittel zum Verbinden des ersten Bauteilelements (3) mit dem zweiten Bauteilelement (5) gefüllt sind und wobei die Klebehohlräume folglich einen Teil des Spalts (9; 209) zwischen dem ersten Bauteilelement (3; 203) und dem zweiten Bauteilelement (5; 205) füllen.

## Claims

1. A method for manufacturing a composite component (1) with a first component element (3) and a second component element (5) that are connected to one another by adhesive bonds, the first component element being a hollow profile (3) and the second component element being a reinforcing element (5) that is arranged within the hollow profile (3), wherein the method has the following steps
- Forming several adhesive cavities (7), wherein
- thermally active plastic (11) is applied to an adhesive bonding side of the first component element (3) and/or to an adhesive bonding side of the second component element (5),
- the first component element (3) and the second component element (5) being arranged opposite each other, whereby a gap (9) is formed between the adhesive bonding side of the first component element (3) and the adhesive bonding side of the second component element (5), and
- heat is supplied in such a way that the thermally active plastic (11) expands and forms ring-shaped boundaries in the gap (9) between the first component element (3) and the second component element (5),
- the adhesive cavities (7) being formed to be ring-shaped and locally limited so that they only fill one part of the gap (9) between the first component element (3) and the second component element (5), and
- Filling the formed adhesive cavities (7) with adhesive for connecting the first component element (3) to the second component element (5).

2. A method according to Claim 1, wherein the first component element (3) is formed from a first material and the second component element (5) is formed from a second material and wherein, for example, the first material and the second material have different thermal linear expansion coefficients.

3. A method according to Claim 2, wherein the first material is a plastic, in particular fibre-reinforced, and the second material is a metallic material.

4. A method according to one of Claims 1 to 3, wherein the thermally active plastic (11) is applied in such a way that the thermally active plastic (11) forms a closed boundary in the gap (9) at least after the heat supplying step.

5. A method according to one of Claims 1 to 4, wherein the heat is supplied in a coating step of the composite component (1), and wherein the heat is in particular process heat for drying the coating.

6. A method according to Claim 5, wherein the coating is applied to the composite component (1) in an immersion process.

7. A method according to one of Claims 1 to 6, wherein during the step of forming the adhesive cavity (7), the thermally active plastic (11) is applied to an outside of the reinforcing element (5) or/and to an inside of the hollow profile (3).

8. A method according to one of Claims 1 to 7, wherein the hollow profile (3) is made up of at least a first hollow profile component (31) and a second hollow profile component (33).

9. A method according to Claim 8, wherein during the step of arranging the reinforcing element in the hollow profile (3), the first reinforcing element (5) is arranged in the first hollow profile component (31) and then the first hollow profile component (31) is connected to the second hollow profile component (33).

10. A method according to one of Claims 1 to 9, wherein the composite component (1) is a supporting part of a motor vehicle body.

11. A composite component (1) with a first component element (3) and a second component element (5) that are connected to one another by adhesive bonds, wherein the first component element is a hollow profile (3) and the second component element is a reinforcing element (5) that is arranged within the hollow profile (3), wherein a gap (9) is formed between the first component element (3) and the second component element (5), in which gap multiple ring-shaped and locally limited adhesive cavities (7) are formed, which are limited by an adhesive bonding side of the first component element (3), an adhesive bonding side of the second component element (5) and ring-shaped walls made from thermally active plastic (11), and wherein the adhesive cavities (7) are filled with adhesive for connecting the first component element (3) to the second component element (5), and wherein the adhesive cavities consequently form part of the gap (9; 209) between the first component element (3; 203) and the second component element (5; 205).

## Revendications

1. Procédé de fabrication d'une pièce composite (1) comprenant un premier élément de pièce (3) et un second élément de pièce (5) qui sont reliés par des liaisons par collage, le premier élément de pièce étant un profilé creux (3) et le second élément de pièce étant un élément de renfort (5) qui est installé à la partie interne du profilé creux (3), ce procédé comprenant les étapes suivantes consistant à :
- former plusieurs cavités de collage (7),
- un matériau synthétique thermiquement actif (11) étant appliqué sur un côté de liaison par collage du premier élément de pièce (3) et/ou sur un côté de liaison par collage du second élément de pièce (5),
- le premier élément de pièce (3) et le second élément de pièce (5) étant positionnés l'un en face de l'autre et un intervalle (9) étant formé entre le côté de liaison par collage du premier élément de pièce (3) et le côté de liaison par collage du second élément de pièce (5), et
- un apport de chaleur étant effectué de sorte que le matériau synthétique thermiquement actif (11) se dilate et forme des délimitations annulaires dans l'intervalle (9) situé entre le premier élément de pièce (3) et le second élément de pièce (5), et
- les cavités de collage (7) étant formées en étant localement annulairement limitées de façon à ne remplir qu'une partie de l'intervalle (9) entre le premier élément de pièce (3) et le second élément de pièce (5), et
- remplir les cavités de collage (7) formées avec de la colle pour relier le premier élément de pièce (3) et le second élément de pièce (5).

2. Procédé conforme à la revendication 1,
selon lequel le premier élément de pièce (3) est réalisé en un premier matériau et le second élément de pièce (5) est réalisé en un second matériau et à titre d'exemple, le premier matériau et le second matériau ont des coefficient de dilatation thermique linéaire différents.

3. Procédé conforme à la revendication 2,
selon lequel le premier matériau est un matériau synthétique, en particulier renforcé par des fibres et le second matériau est un matériau métallique.

4. Procédé conforme à l'une des revendications 1 à 3,
selon lequel le matériau synthétique thermiquement actif (11) est appliqué de sorte qu'il forme une délimitation fermée dans l'intervalle (9) au moins après l'étape d'apport de chaleur.

5. Procédé conforme à l'une des revendications 1 à 4,
selon lequel l'apport de chaleur est effectué lors d'une étape de revêtement de la pièce composite (1) et la chaleur est en particulier de la chaleur de process permettant le séchage du revêtement.

6. Procédé conforme à la revendication 5,
selon lequel le revêtement est appliqué sur la pièce composite (1) par un procédé d'immersion.

7. Procédé conforme à l'une des revendications 1 à 6,
selon lequel lors de l'étape de formation de la cavité de collage (7) le matériau synthétique thermiquement actif (11) est appliqué sur le côté externe de l'élément de renfort (5) et/ou sur le côté interne du profilé creux (3).

8. Procédé conforme à la revendication 7,
selon lequel le profilé creux (3) est constitué d'au moins une première pièce de profilé creux (31) et d'une seconde pièce de profilé creux (33).

9. Procédé conforme à la revendication 8,
selon lequel lors de l'étape de positionnement de l'élément de renfort dans le profilé creux (3), le premier élément de renfort (5) est installé dans la première pièce de profilé creux (31) puis la première pièce de profilé creux (31) est reliée à la seconde pièce de profilé creux (33).

10. Procédé conforme à l'une des revendications 1 à 9,
selon lequel la pièce composite (1) est une partie portante de la carrosserie d'un véhicule automobile.

11. Pièce composite (1) comprenant un premier élément de pièce (3) et un second élément de pièce (5) qui sont reliés par des liaisons de collage, dans laquelle le premier élément de pièce est un profilé creux (3) et le second élément de pièce est un élément de renfort (5) qui est positionné à la partie interne du profilé creux, entre le premier élément de pièce (3) et le second élément de pièce (5) est formé un intervalle (9) dans lequel sont formées plusieurs cavités de collage (7) annulaires et localement limitées qui sont limitées par un côté de liaison par collage du premier élément de pièce (3), un côté de liaison par collage du second élément de pièce (5) et des parois annulaires en un matériau synthétique thermiquement actif (11), les cavités de collage (7) sont remplies d'une colle pour permettre de relier le premier élément de pièce (3) au second élément de pièce (5) et les cavités de collage (7) remplissent ensuite une partie de l'intervalle (9 ; 209) entre le premier élément de pièce (3 ; 203) et le second élément de pièce (5 ; 205).
